# FASCICULE DE BREVET EUROPEEN

(11) **EP 2 690 349 B1**
(45) Date de publication et mention de la délivrance du brevet: **09.09.2020**
(21) Numéro de dépôt: 13176438.3
(22) Date de dépôt: 15.07.2013
(51) Int. Cl.: F21S 41/24, F21S 43/14, F21V 8/00, G02B 6/00

(54) **Guide de lumière pour un dispositif d'éclairage et/ou de signalisation de véhicule automobile**
Lichtwellenleiter für eine Beleuchtungs- und/oder Signalisierungsvorrichtung eines Kraftfahrzeugs
Light guide for a lighting and/or signalling device of a motor vehicle

(30) Priorité: 23.07.2012 FR 1257136
(43) Date de publication de la demande: 29.01.2014
(73) Titulaire: Valeo Vision, 93012 Bobigny Cedex (FR)
(72) Inventeur: Giraud, Sylvain, 72200 La Fleche (FR); Gromfeld, Yves, 49100 Angers (FR)

(56) Documents cités:
- EP-A2- 2 157 363
- EP-A2- 2 354 637
- EP-A2- 2 479 486
- US-A- 5 700 078
- US-A1- 2003 235 046

## Description

L'invention concerne les dispositifs d'éclairage et/ou de signalisation pour véhicules automobiles.

Il est connu de doter de tels dispositifs d'un guide de lumière ayant la forme d'une nappe et de leds dont les rayons lumineux sont acheminés par le guide jusqu'à la sortie du dispositif. On produit ainsi un faisceau lumineux ayant un profil linéaire rectiligne ou courbe. De tels guides sont par exemple connus du document EP 2 157 363 A2.

Or, en particulier lorsque le profil est courbe, le faisceau peut apparaître hétérogène voire discontinu le long de la ligne.

Un but de l'invention est de produire un faisceau dans lequel la répartition de la lumière est continue et homogène le long du profil du faisceau, que ce profil soit rectiligne ou courbe.

À cet effet, on prévoit selon l'invention un guide de lumière pour un dispositif d'éclairage et/ou de signalisation de véhicule automobile, qui comprend au moins un coupleur présentant au moins deux faces d'entrée agencées de sorte que, lorsqu'on dispose une source de lumière à un point prédéterminé par rapport au coupleur, pour chacune des faces d'entrée, tous les rayons de la source passant géométriquement par le point et pénétrant dans le guide par la face d'entrée y sont réfractés dans des plans parallèles entre eux, le guide comprenant en outre au moins deux faces de réflexion et est agencé de sorte que les rayons réfractés sont dirigés directement vers l'une des faces de réflexion où ils sont réfléchis directement vers une face de sortie du guide.

Ainsi, une fois que les faces d'entrée ont donné cette orientation aux rayons pénétrant dans le guide, on peut facilement les orienter pour produire à la sortie du guide un faisceau homogène et continu. Il suffit alors de réaliser dans le guide de tels coupleurs juxtaposés pour obtenir un faisceau dans lequel la répartition de la lumière est continue et homogène le long du profil du faisceau, que ce profil soit rectiligne ou courbe.

On peut prévoir que le coupleur ou au moins l'un des coupleurs est agencé de sorte que les plans parallèles associés à l'une des faces d'entrée sont parallèles à ceux associés à l'autre face d'entrée.

Mais on peut aussi prévoir que le coupleur ou au moins l'un des coupleurs est agencé de sorte que les plans parallèles associés à l'une des faces d'entrée sont inclinés par rapport à ceux associés à l'autre face d'entrée.

Cette disposition est particulièrement avantageuse car elle permet aux coupleurs de suivre la courbure du guide le cas échéant et de produire un faisceau homogène et continu y compris dans les zones courbes de la nappe.

Avantageusement, chaque face d'entrée est agencée, dans l'un au moins des plans parallèles, de manière à répartir de façon homogène sur une des faces de réflexion tous les rayons réfractés dans ce plan. La forme de la face d'entrée peut être choisie en fonction des dimensions d'une source de lumière de façon à répartir de façon homogène sur la face de réflexion la lumière émise par cette source lorsqu'elle est placée au point prédéterminé. Avantageusement, la face d'entrée présente, dans l'un au moins des plans parallèles, une forme comportant un point d'inflexion, par exemple en « S ». En variante, la face d'entrée peut présenter, dans l'un au moins des plans parallèles, une forme dépourvue de point d'inflexion comme un segment de courbe ou un segment de droite.

En effet, bien que cette face d'entrée doive assurer la fonction d'orientation des rayons précités, on dispose d'une grande liberté pour conformer cette face et notamment obtenir la disposition des rayons souhaitée.

De préférence, chaque face de réflexion a une forme cylindrique. Préférentiellement, la face de réflexion présente une génératrice en forme de segment de droite et une directrice en forme de segment de polynôme, notamment parabolique. Dans ce cas, la directrice s'étende dans une direction perpendiculaire à la nappe

Une telle face de réflexion permet en effet de rendre parallèles entre eux tous les rayons réfléchis par cette face, ce qui permet d'obtenir en sortie du guide un faisceau particulièrement homogène.

De préférence, toutes les faces de réflexion s'étendent à une même distance d'une face de sortie du guide.

On améliore ainsi encore l'homogénéité et la continuité du faisceau produit par le guide.

On peut prévoir que le coupleur ou au moins l'un des coupleurs forme un collimateur.

De préférence, le coupleur ou au moins l'un des coupleurs présente une lentille agencée de sorte que, lorsqu'on dispose la source au point prédéterminé, des rayons de la source arrivent directement sur la lentille qui les transmet directement à une face de sortie du guide.

Cette lentille permet de recevoir une partie des rayons de la source qui ne sont pas dirigés vers les faces d'entrée. On améliore ainsi le rendement du système. De plus, la portion du faisceau produite par la lentille peut être disposée pour s'étendre en continuité des portions de faisceau produites par les faces d'entrée, pour assurer ainsi la continuité du faisceau.

De préférence, les rayons de la source arrivant directement sur la lentille y sont réfractés pour être tous dirigés parallèlement à un axe principal du coupleur, en direction de la face de sortie du guide.

Avantageusement, la lentille du coupleur est disposée entre les deux faces d'entrée.

On peut prévoir que la lentille présente une forme convexe vue depuis le point prédéterminé.

En variante, la lentille pourrait être convexe pour améliorer l'homogénéité.

De préférence, le coupleur ou au moins l'un des coupleurs est agencé pour produire à une face de sortie du guide un faisceau de forme rectangulaire dans un plan perpendiculaire à une direction principale du faisceau.

Dans un mode de réalisation. le coupleur ou au moins l'un des coupleurs est agencé pour produire à une face de sortie du guide un faisceau orienté suivant une direction principale normale à cette face ou à un plan tangent à cette face.

Dans un autre mode de réalisation, le coupleur ou au moins l'un des coupleurs est agencé pour produire à une face de sortie du guide un faisceau orienté suivant une direction principale inclinée par rapport à une normale à cette face ou à un plan tangent à cette face.

On peut prévoir que les coupleurs sont au moins au nombre de deux.

Chacun des coupleurs forme ainsi une partie du faisceau total produit par le guide et on peut prévoir autant de coupleurs que nécessaire.

De préférence, au moins deux des coupleurs sont identiques entre eux.

On prévoit également selon l'invention un dispositif d'éclairage et/ou de signalisation pour véhicule automobile, qui comprend un guide de lumière selon l'invention et une source disposée au point prédéterminé.

Par exemple, la source et le guide sont agencés de sorte qu'une intensité lumineuse par unité de surface d'un faisceau produit par le coupleur ou l'un au moins des coupleurs présente en tout point au moins le long d'une ligne médiane d'une face de sortie du guide une valeur comprise entre 80% et 120%, voire entre 90% et 110%, d'une valeur moyenne de cette intensité le long de cette ligne, cette ligne étant parallèle à une face principale du guide ou à un plan tangent à cette face.

Un tel faisceau particulièrement homogène peut facilement être obtenu en conformant convenablement les faces du guide ainsi que la source.

De préférence, la source et le guide sont agencés de sorte que, à une face de sortie du guide, moins de la moitié de la surface d'une section du faisceau produit par le coupleur, dans un plan perpendiculaire à une direction principale du faisceau, provient de la lentille.

Ainsi, la portion du faisceau produite par la lentille demeure minoritaire par rapport au reste du faisceau. La lentille n'a donc qu'un rôle de transmission complémentaire. On évite de la sorte la génération d'un « point chaud » au centre du faisceau c'est-à-dire d'un point présentant une intensité lumineuse particulièrement élevée par rapport aux autres.

De préférence, la source est une diode électroluminescente (LED).

Un autre objet selon l'invention est un véhicule automobile comprenant une pièce et/ou un dispositif d'éclairage et/ou de signalisation selon la présente invention

Nous allons décrire dans la suite un mode préféré de réalisation de l'invention et une variante à titre d'exemples non limitatifs et à l'appui des dessins annexés sur lesquels :
- les figures 1 à 3 sont des vues en perspective et de face du guide de lumière et des sources lumineuses d'un dispositif de signalisation selon l'invention ;
- les figures 4 et 5 sont des vues en perspective de l'un des coupleurs du dispositif de la figure 1 ;
- les figures 6 à 8 sont des vue en plan du coupleur de la figure 4 montrant le trajet des rayons lumineux ;
- la figure 9 est une vue en élévation du coupleur de la figure 4 montrant également le trajet des rayons lumineux ;
- la figure 10 est une vue en perspective du coupleur de la figure 4 montrant le faisceau produit par le coupleur ;
- la figure 11 est une photographie de face du faisceau produit par le guide de la figure 1 ; et
- les figures 12 à 14 sont des vues analogues aux figures 7 et 8 montrant une variante de réalisation du guide.

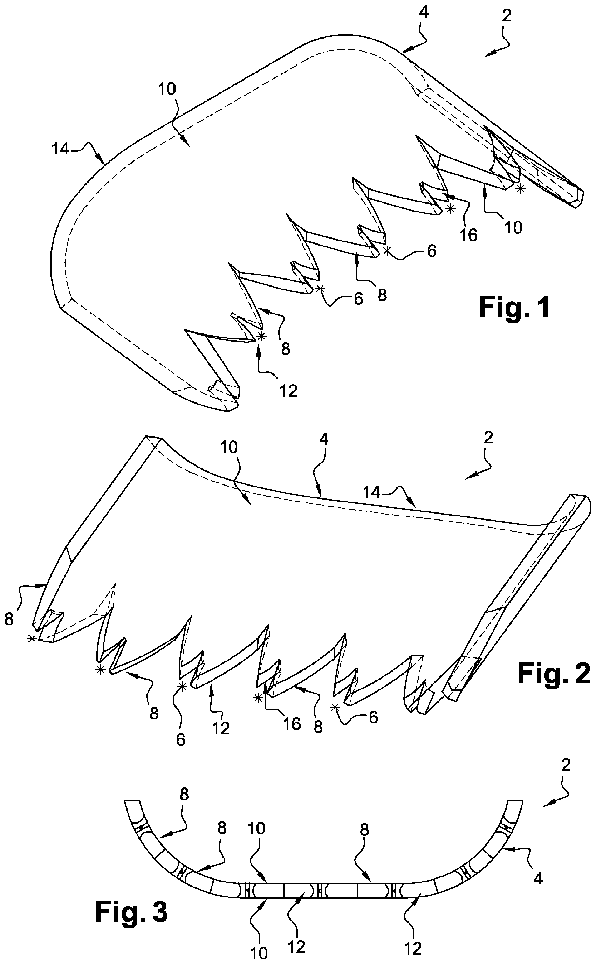

On a illustré aux figures 1 à 11 un mode de réalisation d'un dispositif de signalisation pour véhicules automobiles selon l'invention. Il est entendu que l'invention est également applicable à des dispositifs d'éclairage ou encore à des dispositifs d'éclairage et de signalisation pour de tels véhicules.

Le dispositif 2 comprend un guide de lumière 4 et des sources lumineuses 6 comprenant en l'espèce des leds. Le guide comprend des coupleurs 8 qui sont en l'espèce au nombre de sept, ce nombre n'étant pas limitatif de sorte qu'il peut être inférieur ou supérieur à cette valeur. Le nombre de leds est identique au nombre de coupleurs auxquelles elles sont associées de façon bijective.

Le guide 4 a une forme générale de nappe profilée cylindrique et présente deux faces principales 10 localement parallèles l'une à l'autre de sorte que le guide présente une épaisseur constante. En partie médiane du guide, les deux faces 10 sont planes. Les deux portions d'extrémités latérales du guide sont recourbées du même côté de la partie médiane pour lui donner un profil en forme générale de «U» comme illustré à la figure 3. Les faces 10 sont donc respectivement convexe et concave.

Il s'agit en l'espèce d'un guide d'une seule pièce réalisé par moulage d'une matière plastique transparente. Il s'agit par exemple de PMMA d'indice de réfraction de 1,49 ou de polycarbonate d'indice de réfraction de 1,59.

Le guide présente deux champs s'étendant chacun sur les parties d'extrémité et la partie médiane et formant respectivement un champ d'entrée 12 et un champ de sortie 14. Les coupleurs 8 forment le champ d'entrée et se succèdent le long de ce dernier de l'une à l'autre des extrémités du guide.

Nous allons maintenant présenter en détail la forme de l'un des coupleurs s'étendant dans la partie médiane.

Le coupleur 8 présente deux faces principales planes 10 formées par les faces principales du guide. Il présente en outre deux faces d'entrée 16, une lentille 18 et deux faces de réflexion internes 20. Une face 22 a également été indiquée sur les dessins comme s'étendant de l'une à l'autre des extrémités des faces de réflexion 20. Toutefois, elle résulte de l'isolement artificiel du coupleur par rapport au guide. Une telle face n'existe pas en fait.

On utilise ici un repère orthogonal X, Y, Z dans lequel les directions X et Y sont parallèles aux faces 10 et les plans XY et XZ forment deux plans de symétrie du coupleur.

Les faces précitées constituent ici les seules faces du coupleur. Le coupleur a en l'espèce une forme générale de triangle isocèle en vue en plan. Il présente une échancrure ou bec 24 entamant la pointe du triangle opposée à la base 22 de ce dernier. Cette échancrure est matérialisée par les deux faces d'entrée 16 qui s'étendent en regard l'une de l'autre mais en divergeant à mesure qu'elles se rapprochent de la pointe. La lentille 18 assure la jonction entre les deux extrémités internes des faces d'entrée 16. Et ces dernières, à leurs extrémités externes, présentent une arête commune avec les faces de réflexion 20 respectives.

La source 6 est disposée de sorte que son centre géométrique s'étend à un point prédéterminé 26 situé en regard des deux faces d'entrée 16 et de la lentille 18.

Les faces d'entrée 16 et les faces de réflexion 20 sont construites de façon à produire les effets suivants sur les rayons lumineux émis par la source disposée au point 6.

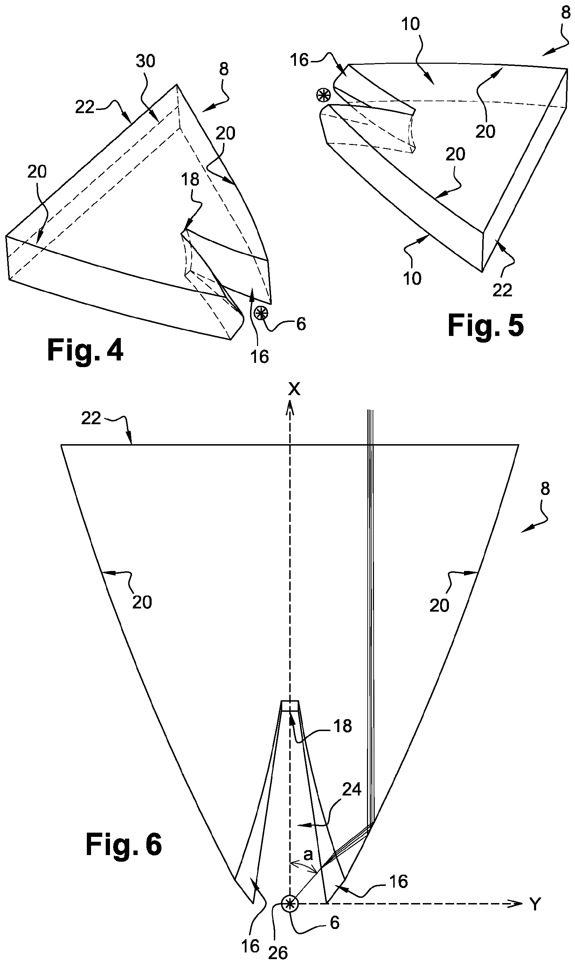

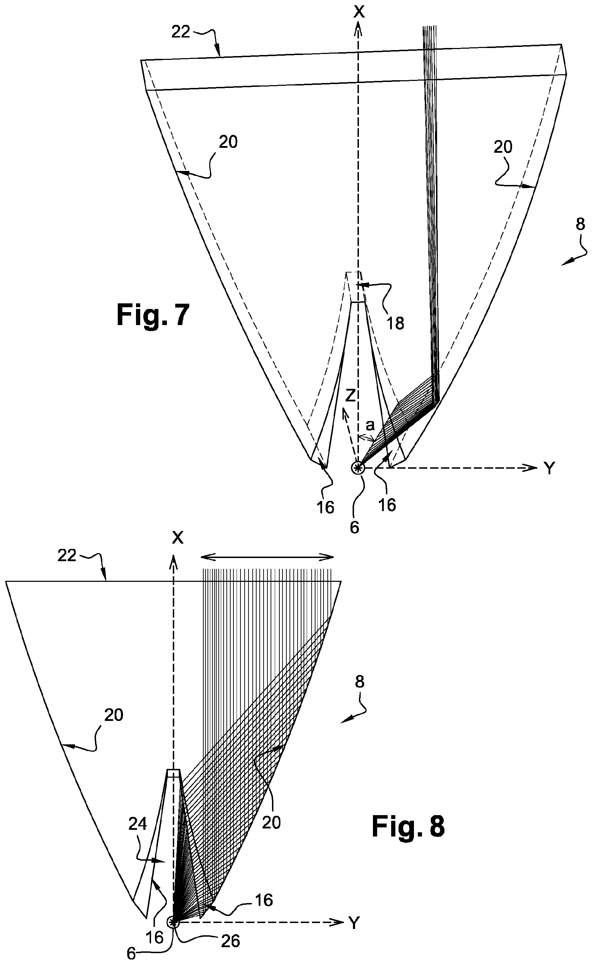

Comme illustré aux figures 6 et 7, on considère d'abord les rayons lumineux de la source qui frappent l'une quelconque des faces d'entrée 16 en ayant dans le plan XY une même inclinaison a par rapport à l'axe X. Ces rayons sont réfractés par cette face pour être dirigés directement vers la face de réflexion 20 située en regard de cette dernière et de sorte que celle-ci réfléchit les rayons suivant une direction parallèle à l'axe X.

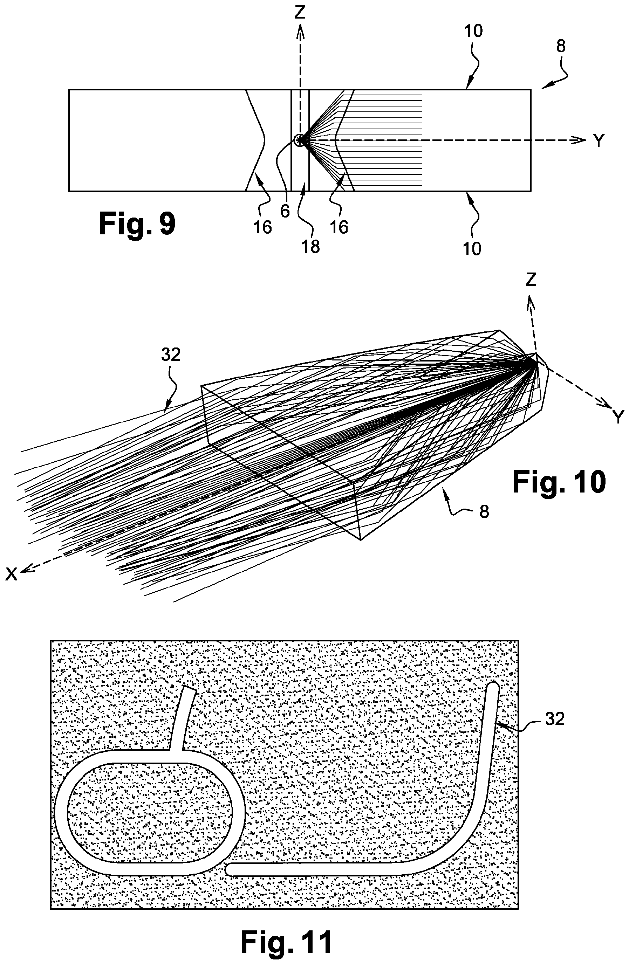

De plus, en référence à la figure 9, et en observant le coupleur dans un plan parallèle aux axes Y et Z, pour chaque face d'entrée 16, les rayons de la source qui frappent cette face y sont réfractés à l'intérieur du coupleur dans des plans qui sont tous parallèles aux axes X et Y c'est-à-dire aux faces principales 10. En l'espèce, ces plans associés aux deux faces 16 sont parallèles entre eux. À cette fin, on peut donner aux faces 16 dans des plans parallèles aux directions Y et Z le profil d'une lentille à un foyer situé au point 26 qui réfracte donc un rayonnement divergent en un rayonnement à rayons parallèles.

En outre, en référence à la figure 6, en l'absence de collimateur, l'intensité lumineuse de la source 6 varie dans le plan XY en fonction de l'angle d'émission a par rapport à la direction X. En l'espèce, les faces d'entrée et de réflexion sont calculées de façon à obtenir autant que possible une répartition homogène de l'intensité lumineuse suivant une direction parallèle à l'axe Y sur la face de sortie fictive 22 et sur la face de sortie 14 du guide.

On définit en l'espèce une ligne médiane 30 parallèle à la direction Y et s'étendant sur la face 22 ou sur la face de sortie du guide, à égale distance des deux faces principales 10. On fait en sorte qu'une intensité lumineuse par unité de surface du faisceau produit par le coupleur présente, en tout point de cette ligne au moins, une valeur comprise entre 90% et 110% d'une valeur moyenne de cette intensité le long de cette ligne. De la sorte, on obtient une répartition particulièrement homogène de l'intensité lumineuse le long de cette ligne, comme illustré à la figure 8. De préférence, cette propriété est également valable pour toutes les lignes de cette face parallèles à la ligne 30.

En l'espèce, les faces de réflexion 20 sont des faces de réflexion totale et présente une forme cylindrique à profil parabolique ou proche d'une parabole dans un plan parallèle aux directions X et Y.

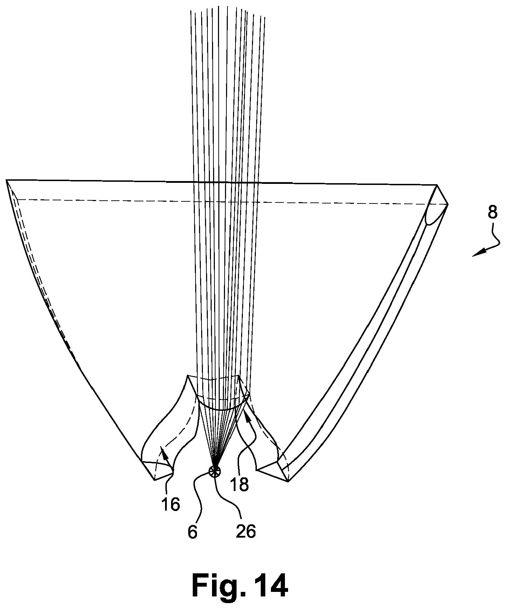

La lentille 18 permet de recevoir le rayonnement de la source dirigé vers la face de sortie et qui n'est pas reçu par les faces d'entrée. C'est ce qui a été illustré sur la figure 14 en relation avec la variante de réalisation. Les rayons de la source arrivant directement sur la lentille y sont réfractés pour être tous dirigés parallèlement à l'axe X en direction de la face de sortie du guide. La portion du faisceau produit par la lentille assure donc la continuité avec les deux portions de faisceau produites par les faces de réflexion 20. Le foyer de la lentille est situé au point 6. La source et le guide sont agencés de sorte que moins de la moitié de la surface d'une section du faisceau produit par le coupleur, dans un plan perpendiculaire à une direction principale du faisceau, provient de la lentille.

Comme illustré à la figure 10, le coupleur forme donc un collimateur qui génère en sortie du coupleur un faisceau collimaté de section rectangulaire dans un plan perpendiculaire à la direction X qui constitue la direction de propagation du faisceau. La répartition de l'intensité lumineuse dans la section est homogène suivant les deux directions Y et Z. On fait ici observer que, compte tenu du trajet des rayons lumineux expliqué plus haut, aucun de ces rayons ne vient normalement frapper l'une des faces principales 10.

On réalise ainsi trois coupleurs de ce type s'étendant côte à côte dans la partie médiane du guide 4.

Les quatre coupleurs s'étendant dans les parties d'extrémité du guide sont formés de façon légèrement différente compte tenu du galbe de la nappe à ces endroits. Chacun de ces coupleurs se différencie de ceux illustrés aux figures 4 à 10 par le fait que le plan XY n'en forme plus un plan de symétrie. On considère dans la suite les deux moitiés du coupleur formées chacune par une face d'entrée 16, une moitié de la lentille 18 et une face de réflexion 20 situées du même côté de l'axe X. Dans les coupleurs des zones d'extrémité, ces deux moitiés sont inclinées l'une par rapport à l'autre comme si on avait modifié le coupleur précédent en faisant « tourner » ces deux moitiés autour d'une charnière d'axe X. Au contraire, dans les coupleurs de la partie médiane, ces deux moitiés sont symétriques l'une de l'autre par rapport au plan XZ. La définition et les propriétés des faces d'entrée et de réflexion demeure inchangées si ce n'est que les plans parallèles associés à l'une des faces d'entrée sont inclinés par rapport à ceux associés à l'autre face d'entrée. De plus, ces faces sont maintenant limitées par des portions courbes des faces principales qui les interceptent.

Ces coupleurs courbés produisent donc eux aussi des faisceaux qui présentent en section dans un plan parallèle aux directions Y et Z une répartition d'intensité lumineuse homogène et continue, cette section étant cette fois courbée.

Dans le présent exemple, les faces d'entrée 16 sont toutes identiques entre elles mise à part leur limitation par les faces principales 10. Il en est de même pour les faces de réflexion 20.

L'épaisseur du guide de lumière est égale à l'épaisseur de chacun des coupleurs. De plus, les coupleurs sont disposés de sorte que les points 6 s'étendent tous à la même distance de la face de sortie 14. Il en est de même pour la distance s'étendant entre cette face et chaque face de réflexion 20. En l'espèce les coupleurs sont orientés suivant la direction d'extrusion du guide.

Un dispositif de signalisation comprenant plusieurs coupleurs de ce type permet de produire un faisceau 32 comme celui illustré à la figure 11 qui présente une bonne continuité et une bonne homogénéité tout le long des lignes qui le constituent, en particulier dans les portions courbes.

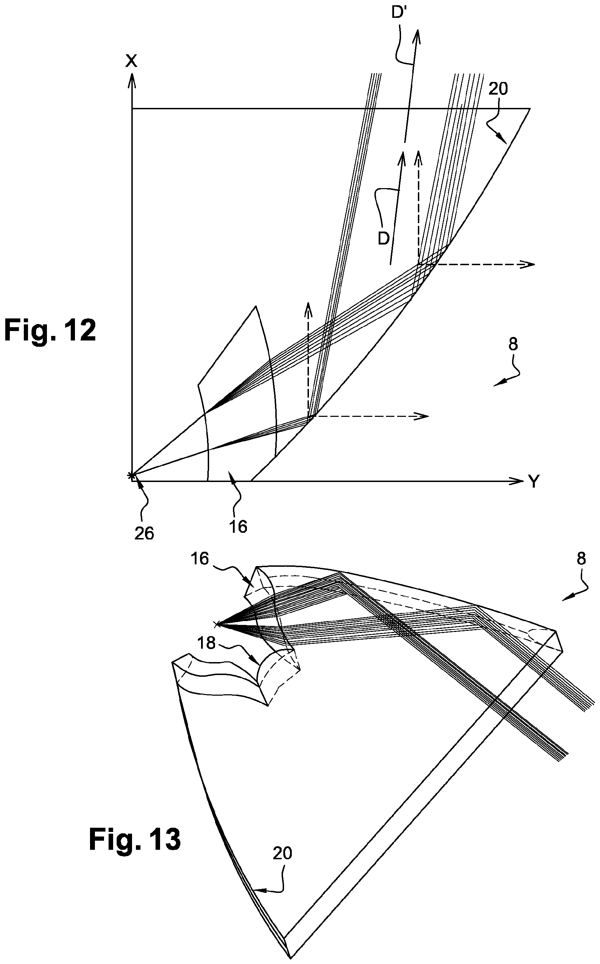

Dans la variante illustrée aux figures 12 à 14, les faces d'entrée et de réflexion sont modifiées de sorte que les rayons réfléchis par cette dernière sont orientés suivant une même direction principale D avant de franchir la face de sortie, puis suivant une même direction principale D' en sortie de cette face. Ces deux directions D et D' sont inclinées par rapport à l'axe X et inscrites dans un plan parallèle aux directions X et Y. La direction D étant inclinée par rapport à l'axe X, la direction D' l'est encore plus compte tenu de la réfraction qui se produit au passage de la face de sortie. Cette variante permet notamment de compenser une éventuelle inclinaison de l'axe principal de la source lumineuse par rapport à l'axe X. La face d'entrée a ici une forme en « S » dans un plan parallèle aux directions X et Y pour accroître encore l'homogénéité de l'intensité lumineuse. Elle présente ici une forme profilée à profil en hyperbole.

Le guide pourra par exemple avoir une longueur et/ou une largeur comprise entre 25 et 35 mm.

L'invention est applicable à des guides de lumière plats ou courbes.

Bien entendu, on pourra apporter à l'invention de nombreuses modifications sans sortir du cadre de celle-ci.

Bien que la face de sortie 14 présente en l'espèce une forme plane, on pourra donner à cette face une forme courbe dans un plan ou dans deux plans perpendiculaires entre eux. C'est donc un plan tangent à cette face courbe et la direction normale à ce plan qu'il faudra alors considérer pour repérer l'orientation de la direction principale du faisceau de chaque coupleur.

On peut définir chacune des faces d'entrée et des faces de réflexion portion par portion, sans que ces faces présentent une forme ou une définition géométrique globale simple, pour donner au faisceau produit par le coupleur les propriétés souhaitées.

## Revendications

1. Guide de lumière (4) pour un dispositif d'éclairage et/ou de signalisation de véhicule automobile, **caractérisé en ce qu'**il comprend au moins un coupleur (8) présentant au moins deux faces d'entrée (16) agencées de sorte que, lorsqu'on dispose une source de lumière (6) à un point prédéterminé (26) par rapport au coupleur, pour chacune des faces d'entrée, tous les rayons de la source passant géométriquement par le point et pénétrant dans le guide par la face d'entrée y sont réfractés dans des plans parallèles entre eux, le guide comprenant en outre au moins deux faces de réflexion (20), le guide étant agencé de sorte que les rayons réfractés sont dirigés directement vers l'une des faces de réflexion où ils sont réfléchis directement vers une face de sortie (14) du guide.

2. Guide selon la revendication précédente dans lequel le coupleur ou au moins l'un des coupleurs (8) est agencé de sorte que les plans parallèles associés à l'une des faces d'entrée sont parallèles à ceux associés à l'autre face d'entrée.

3. Guide selon au moins l'une quelconque des revendications 1 à 2 dans lequel le coupleur ou au moins l'un des coupleurs (8) est agencé de sorte que les plans parallèles associés à l'une des faces d'entrée sont inclinés par rapport à ceux associés à l'autre face d'entrée.

4. Guide selon l'une quelconque des revendications précédentes, dans lequel chaque face d'entrée est agencée, dans l'un au moins des plans parallèles, de manière à répartir de façon homogène sur une des faces de réflexion tous les rayons réfractés dans ce plan.

5. Guide selon au moins l'une quelconque des revendications 1 à 4 dans lequel chaque face de réflexion (20) a une forme cylindrique.

6. Guide selon la revendication précédente dans lequel la face de réflexion (20) présente une génératrice en forme de segment de droite et une directrice en forme de segment de polynôme, notamment parabolique, la directrice s'étendant notamment dans une direction perpendiculaire à la nappe.

7. Guide selon au moins l'une quelconque des revendications précédentes dans lequel le coupleur ou au moins l'un des coupleurs présente une lentille (18) agencée de sorte que, lorsqu'on dispose la source au point prédéterminé, des rayons de la source arrivent directement sur la lentille qui les transmet directement à une face de sortie du guide.

8. Guide selon la revendication précédente, dans lequel la lentille du coupleur est disposée entre les deux faces d'entrée.

9. Guide selon au moins l'une quelconque des revendications précédentes dans lequel le coupleur ou au moins l'un des coupleurs est agencé pour produire à une face de sortie (14) du guide un faisceau (32) de forme rectangulaire dans un plan perpendiculaire à une direction principale du faisceau.

10. Guide selon au moins l'une quelconque des revendications précédentes dans lequel le coupleur ou au moins l'un des coupleurs est agencé pour produire à une face de sortie (14) du guide un faisceau (32) orienté suivant une direction principale normale à cette face ou à un plan tangent à cette face.

11. Guide selon au moins l'une quelconque des revendications précédentes dans lequel le coupleur ou au moins l'un des coupleurs est agencé pour produire à une face de sortie du guide un faisceau orienté suivant une direction principale (D') inclinée par rapport à une normale à cette face ou à un plan tangent à cette face.

12. Guide selon au moins l'une quelconque des revendications précédentes dans lequel les coupleurs (8) sont au moins au nombre de deux.

13. Dispositif d'éclairage et/ou de signalisation (2) pour véhicule automobile **caractérisé en ce qu'**il comprend un guide de lumière (4) selon au moins l'une quelconque des revendications précédentes et une source (6) disposée audit point prédéterminé.

14. Dispositif selon la revendication précédente dans lequel le guide est conforme à la revendication 9, la source et le guide étant agencés de sorte que, à une face de sortie (14) du guide, moins de la moitié de la surface d'une section du faisceau (32) produit par le coupleur, dans un plan perpendiculaire à une direction principale du faisceau et situé immédiatement après la face de sortie du guide, provient de la lentille (18).

15. Dispositif selon au moins l'une quelconque des revendications 13 ou 14 dans lequel la source est une diode électroluminescente (LED).

## Patentansprüche

1. Lichtleiter (4) für eine Beleuchtungs- und/oder Signalisierungsvorrichtung eines Kraftfahrzeugs, **dadurch gekennzeichnet, dass** er wenigstens einen Koppler (8) umfasst, der wenigstens zwei Eintrittsflächen (16) aufweist, die so gestaltet sind, dass, wenn eine Lichtquelle (6) an einem vorbestimmten Punkt (26) in Bezug auf den Koppler angeordnet wird, für jede der Eintrittsflächen alle Strahlen der Quelle, die geometrisch durch den Punkt verlaufen und über die Eintrittsfläche in den Lichtleiter eindringen, dort in zueinander parallelen Ebenen gebrochen werden, wobei der Lichtleiter außerdem wenigstens zwei Reflexionsflächen (20) umfasst, wobei der Lichtleiter so gestaltet ist, dass die gebrochenen Strahlen direkt zu einer der Reflexionsflächen gelenkt werden, wo sie direkt zu einer Austrittsfläche (14) des Lichtleiters reflektiert werden.

2. Lichtleiter nach dem vorhergehenden Anspruch, wobei der Koppler oder wenigstens einer der Koppler (8) so gestaltet ist, dass die parallelen Ebenen, die einer der Eintrittsflächen zugeordnet sind, parallel zu denjenigen sind, die der anderen Eintrittsfläche zugeordnet sind.

3. Lichtleiter nach wenigstens einem der Ansprüche 1 bis 2, wobei der Koppler oder wenigstens einer der Koppler (8) so gestaltet ist, dass die parallelen Ebenen, die einer der Eintrittsflächen zugeordnet sind, in Bezug auf diejenigen, die der anderen Eintrittsfläche zugeordnet sind, geneigt sind.

4. Lichtleiter nach einem der vorhergehenden Ansprüche, wobei jede Eintrittsfläche in wenigstens einer der parallelen Ebenen so gestaltet ist, dass alle Strahlen, die in dieser Ebene gebrochen werden, homogen auf einer der Reflexionsflächen verteilt werden.

5. Lichtleiter nach wenigstens einem der Ansprüche 1 bis 4, wobei jede Reflexionsfläche (20) eine zylindrische Form hat.

6. Lichtleiter nach dem vorhergehenden Anspruch, wobei die Reflexionsfläche (20) eine Erzeugende in Form eines Geradenabschnitts und eine Leitlinie in Form eines, insbesondere parabolischen, Polynomabschnitts aufweist, wobei sich die Leitlinie insbesondere in einer Richtung erstreckt, die zu der Decke senkrecht ist.

7. Lichtleiter nach wenigstens einem der vorhergehenden Ansprüche, wobei der Koppler oder wenigstens einer der Koppler eine Linse (18) aufweist, die so gestaltet ist, dass, wenn die Quelle in dem vorbestimmten Punkt angeordnet wird, Strahlen von der Quelle direkt auf der Linse auftreffen, welche sie direkt zu einer Austrittsfläche des Lichtleiters überträgt.

8. Lichtleiter nach dem vorhergehenden Anspruch, wobei die Linse des Kopplers zwischen den zwei Eintrittsflächen angeordnet ist.

9. Lichtleiter nach wenigstens einem der vorhergehenden Ansprüche, wobei der Koppler oder wenigstens einer der Koppler dafür ausgebildet ist, an einer Austrittsfläche (14) des Lichtleiters ein Bündel (32) zu erzeugen, das eine rechteckige Form in einer zu einer Hauptrichtung des Bündels senkrechten Ebene hat.

10. Lichtleiter nach wenigstens einem der vorhergehenden Ansprüche, wobei der Koppler oder wenigstens einer der Koppler dafür ausgebildet ist, an einer Austrittsfläche (14) des Lichtleiters ein Bündel (32) zu erzeugen, das in einer Hauptrichtung ausgerichtet ist, die zu dieser Fläche oder zu einer zu dieser Fläche tangentialen Ebene senkrecht ist.

11. Lichtleiter nach wenigstens einem der vorhergehenden Ansprüche, wobei der Koppler oder wenigstens einer der Koppler dafür ausgebildet ist, an einer Austrittsfläche des Lichtleiters ein Bündel zu erzeugen, das in einer Hauptrichtung (D') ausgerichtet ist, die in Bezug auf eine Senkrechte zu dieser Fläche oder zu einer zu dieser Fläche tangentialen Ebene geneigt ist.

12. Lichtleiter nach wenigstens einem der vorhergehenden Ansprüche, wobei die Anzahl der Koppler (8) wenigstens zwei beträgt.

13. Beleuchtungs- und/oder Signalisierungsvorrichtung (2) für ein Kraftfahrzeug, **dadurch gekennzeichnet, dass** sie einen Lichtleiter (4) nach wenigstens einem der vorhergehenden Ansprüche und eine Quelle (6), die in dem vorbestimmten Punkt angeordnet ist, umfasst.

14. Vorrichtung nach dem vorhergehenden Anspruch, wobei der Lichtleiter Anspruch 9 entspricht, wobei die Quelle und der Lichtleiter so gestaltet sind, dass an einer Austrittsfläche (14) des Lichtleiters weniger als die Hälfte der Fläche eines Querschnitts des von dem Koppler erzeugten Bündels (32) in einer Ebene, die zu einer Hauptrichtung des Bündels senkrecht ist und sich unmittelbar nach der Austrittsfläche des Lichtleiters befindet, von der Linse (18) stammt.

15. Vorrichtung nach wenigstens einem der Ansprüche 13 oder 14, wobei die Quelle eine Leuchtdiode (LED) ist.

## Claims

1. Light guide (4) for an automobile lighting and/or signaling device, **characterized in that** it comprises at least one coupler (8) having at least two input faces (16) arranged so that, when a light source (6) is positioned at a predetermined point (26) in relation to the coupler, for each of the input faces, all the rays from the source passing geometrically through the point and penetrating into the guide through the input face are refracted there in mutually parallel planes, the guide also comprising at least two reflection faces (20), the guide being arranged so that the refracted rays are directed directly toward one of the reflection faces where they are reflected directly toward an output face (14) of the guide.

2. Guide according to the preceding claim, in which the coupler or at least one of the couplers (8) is arranged so that the parallel planes associated with one of the input faces are parallel to those associated with the other input face.

3. Guide according to at least any one of Claims 1 and 2, in which the coupler or at least one of the couplers (8) is arranged so that the parallel planes associated with one of the input faces are inclined relative to those associated with the other input face.

4. Guide according to any one of the preceding claims, in which each input face is arranged, in at least one of the parallel planes, so as to uniformly distribute on one of the reflection faces all the rays refracted in this plane.

5. Guide according to at least any one of Claims 1 to 4, in which each reflection face (20) is cylindrical.

6. Guide according to the preceding claim, in which the reflection face (20) has a generatrix in the form of a straight line segment and a directrix in the form of a polynomial segment, notably parabolic, the directrix extending notably in a direction at right angles to the ply.

7. Guide according to at least any one of the preceding claims, in which the coupler or at least one of the couplers has a lens (18) arranged so that, when the source is positioned at the predetermined point, rays from the source arrive directly on the lens which transmits them directly to an output face of the guide.

8. Guide according to the preceding claim, in which the lens of the coupler is positioned between the two input faces.

9. Guide according to at least any one of the preceding claims, in which the coupler or at least one of the couplers is arranged to produce, at an output face (14) of the guide, a beam (32) of rectangular form in a plane at right angles to a main direction of the beam.

10. Guide according to at least any one of the preceding claims, in which the coupler or at least one of the couplers is arranged to produce, at an output face (14) of the guide, a beam (32) oriented in a main direction normal to this face or to a plane tangential to this face.

11. Guide according to at least any one of the preceding claims, in which the coupler or at least one of the couplers is arranged to produce, at an output face of the guide, a beam oriented in a main direction (D') inclined relative to a normal to this face or to a plane tangential to this face.

12. Guide according to at least any one of the preceding claims, in which there are at least two couplers (8).

13. Lighting and/or signaling device (2) for an automobile, **characterized in that** it comprises a light guide (4) according to at least any one of the preceding claims and a source (6) arranged at said predetermined point.

14. Device according to the preceding claim, in which the guide conforms to Claim 9, the source and the guide being arranged so that, at an output face (14) of the guide, less than half of the surface of a section of the beam (32) produced by the coupler, in a plane at right angles to a main direction of the beam and situated immediately after the output face of the guide, originates from the lens (18).

15. Device according to at least any one of Claims 13 or 14, in which the source is a light-emitting diode (LED).
